# FASCICULE DE BREVET EUROPEEN

(11) **EP 3 137 417 B1**
(45) Date de publication et mention de la délivrance du brevet: **14.11.2018**
(21) Numéro de dépôt: 15725812.0
(22) Date de dépôt: 27.04.2015
(51) Int. Cl.: C01B 3/40, C01B 3/26, C01B 3/38

(54) **PROCÉDÉ DE RÉFORMAGE SEC D'AU MOINS UN ALCANE.**
VERFAHREN ZUR TROCKENREFORMIERUNG VON MINDESTENS EINEM ALKAN
METHOD FOR DRY REFORMING OF AT LEAST ONE ALKANE

(30) Priorité: 29.04.2014 FR 1453844
(43) Date de publication de la demande: 08.03.2017
(73) Titulaire: Université des Sciences et Technologies de Lille 1, 59655 Villeneuve-d'Ascq (FR); Centre National de la Recherche Scientifique (C.N.R.S.), 75794 Paris Cedex 16 (FR)
(72) Inventeur: LOFBERG, Axel, 59000 Lille (FR); DUHAMEL JALOWIECKI, Louise, 59650 Villeneuve d'Ascq (FR); GUERRERO, Jesus, 59650 Villeneuve d'Ascq (FR)
(74) Mandataire: Lavoix
(86) Numéro de dépôt international: PCT/FR2015/051141
(87) Numéro de publication internationale: WO 2015/166182

(56) Documents cités:
- EP-A1- 0 995 715
- US-A1- 2005 129 995
- US-A1- 2010 274 060

## Description

### DOMAINE TECHNIQUE DE L'INVENTION

L'invention se rapporte au domaine du reformage sec d'alcanes, plus particulièrement du reformage du méthane. Le reformage sec du méthane (CH4) est une voie de valorisation de ce dernier, d'où son intérêt. C'est un procédé qui utilise deux gaz à effet de serre, le méthane et le dioxyde de carbone (CO2), et qui produit un gaz de synthèse comprenant du dihydrogène (H2) et du monoxyde de carbone (CO).

### ETAT DE LA TECHNIQUE ANTERIEURE

Les réacteurs traditionnels utilisés pour la réaction de reformage sec du méthane sont généralement constitués d'un réacteur à lit catalytique fixe traversé par un flux de gaz constitué d'un mélange de méthane et de dioxyde de carbone éventuellement dilué. La réaction est effectuée à haute température (typiquement 700-900°C) afin de surmonter les limitations thermodynamiques liées à cette réaction endothermique.

Le reformage sec du méthane présente l'avantage de consommer du dioxyde de carbone, un gaz contribuant fortement à l'effet de serre. Les inconvénients sont toutefois, (i) de conduire à un rapport H2/CO plus faible par rapport aux autres voies de reformage (reformage oxydant et/ou vaporeformage), (ii) d'être endothermique contrairement au reformage oxydant. Les principales difficultés rencontrées sont la formation de coke conduisant à la désactivation rapide des catalyseurs à cause des températures élevées de fonctionnement et la présence simultanée de CO2 (réactif) et d'hydrogène (produit) qui conduit, par la réaction inverse du gaz à l'eau, à une perte en sélectivité.

Des recherches ont ainsi porté sur les catalyseurs en eux-mêmes, afin de les rendre actifs à des températures aussi basses que possible, plus sélectifs et plus résistants au cokage.

D'autres recherches ont porté sur le mode de contact entre les réactifs et les catalyseurs. De façon connue, dans la littérature deux approches ont été divulguées:

Les travaux de Veser et al proposent un système employant un solide vecteur d'oxygène inspiré du procédé par boucle chimique pour l'oxydation du méthane. Dans cette approche, l'oxygène est remplacé par du CO2. Bien que nommé Chemical Loop Dry Reforming (reformage sec par boucle chimique) l'objectif de ce procédé n'est pas la production de gaz de synthèse, voire d'hydrogène, mais l'oxydation totale du méthane en CO2 et H2O pour la production de chaleur et de CO.

Les documents connus sur le sujet sont: 1a) Michelle Najera, Rahul Solunke, Todd Gardner, Götz Veser, Carbon capture and utilization via chemical looping dry reforming, Chemical Engineering Research and Design 89 (2011) 1533-1543, http://dx.doi.org/10.1016/j.cherd.2010.12.017 ; **1b**) Saurabh Bhavsar, Michelle Najera, Götz Veser, Chemical Looping Dry Reforming as Novel, Intensified Process for CO2 Activation, Chem. Eng. Technol. 35, No. 7 (2012), 1281-1290.

D'autres travaux sont basés sur un fonctionnement périodique pour le reformage sec du méthane. Ainsi dans la phase de réaction avec le méthane, le solide catalytique conduit intégralement à la formation de carbone solide et d'hydrogène (cokage). Le carbone est ensuite réoxydé par le CO2 dans la seconde phase de la réaction. Dans de telles conditions le solide fait office de catalyseur de cokage et de vecteur de carbone ; le procédé vise la production d'hydrogène pur. Les documents suivants divulguent ces travaux : **2a**) Eakkapon Promaros, Suttichai Assabumrungrat, Navadol Laosiripojana, Piyasan Praserthdam, Tomohiko Tagawa and Shigeo Goto, Carbon dioxide reforming of methane under periodic opération, Korean J. Chem. Eng. 24(1) (2007) 44-50 ; **2b**) S. Assabumrungrat, S. Charoenseri, N. Laosiripojana, W. Kiatkittipong, P. Praserthdam, Effect of oxygen addition on catalytic performance of Ni/SiO2-MgO toward carbon dioxide reforming of methane under periodic opération, International Journal of Hydrogen Energy 34 (2009) 6211-6220, http://dx.doi.org/10.1016/j.ijhydene.2009.05.128 ; **2c**) B. Pholjaroen, N. Laosiripojana, P. Praserthdam, S. Assabumrungrat, Reactivity of Ni/SiO2-MgO toward carbon dioxide reforming of methane under steady state and periodic opérations, Journal of Industrial and Engineering Chemistry 15 (2009) 488-497.

Il est en outre intéressant de mentionner des travaux très récents de Sadykov et al (3) illustrant l'utilisation de la technique pulsée pour l'étude de la cinétique de la réaction de reformage sec. La méthode pulsée consiste à injecter un des réactifs au moyen d'impulsions successives de ce réactif afin d'en évaluer la capacité de réaction (en particulier la capacité en oxygène disponible dans un solide ainsi que la cinétique de réaction). Un autre réactif est ensuite injecté de la même manière. Dans ces travaux, l'alimentation séparée des deux réactifs n'est utilisée que pour élucider les mécanismes réactionnels afin d'améliorer les performances de la réaction de reformage sec dans les conditions traditionnelles de fonctionnement (coalimentation). Les documents concernés sont de V. Sadykov, et al., "Mechanism of CH4 dry reforming by pulse microcalorimetry: Metal nanoparticles on perovskite/fluorite supports with high oxygen mobility", Thermochim. Acta (2013), http://dx.doi.org/10.1016/j.tca.2013.01.034.

Aucun de ces procédés ne suggère d'exploiter un mécanisme dans lequel le solide est réduit et oxydé de façon périodique pour la production de gaz de synthèse.

EP 0 995 715 A1 divulgue un procédé réalisé dans un réacteur traversé par un flux gazeux. Le réacteur comprend un solide catalytique exposé cycliquement et alternativement à un flux contenant de l'oxygène, à un flux de purge (p.ex. dioxyde de carbone) et à un flux contenant un hydrocarbure, p.ex. méthane, éthane, propane... Quand le flux contenant de l'oxygène est mis en contact avec le solide catalytique, le solide adsorbe l'oxygène. Le solide catalytique est composé d'un catalyseur et d'un conducteur mixte sélectif pour l'oxygène. Le conducteur mixte est composé (1) de substances à base de perovskite ayant pour formule structurale A₁₋ₓMₓBO_{3-δ}, où A est un ion de terres rares, M est Sr, Ca, Ba ou des mélanges de ceux-ci, B est Co, Mn, Cr, Fe ou des mélanges de ceux-ci, x varie de 0 à 1 et δ est la déviation par rapport à la composition stoechiométrique résultant de la substitution de Sr, Ca et Ba aux ions de terres rares; (2) de substances céramiques choisies dans le groupe constitué par Bi₂O₃, ZrO₂, CeO₂, ThO₂, HfO₂ et des mélanges de ceux-ci, la substance céramique étant dopée au CaO, aux oxydes métalliques de terres rares ou aux mélanges de ceux-ci; (3) de l'oxyde brownmillerite; et (4) de mélanges de n'importe lesquels de ceux-ci.

On connait en outre de nombreux documents-brevets dans le domaine du reformage sec. A titre illustratif la demande de brevet EP 0692451 divulgue un catalyseur pour le reformage sec du méthane en gaz de synthèse. C'est le catalyseur qui est caractéristique de cette invention.

On connait aussi la demande WO 2012/167351 qui concerne un catalyseur spécifique pour la production d'hydrogène par reformage sec de dioxyde de carbone.

Il est aussi intéressant de noter la demande de brevet WO 2013 /068905 qui décrit la production d'un catalyseur de reformage, et le reformage du méthane. La préparation du catalyseur revêt une importance majeure dans la réaction de reformage.

Aucune des solutions connues ne permet d'éviter simultanément les deux inconvénients majeurs du reformage catalytique à savoir la réaction inverse du gaz à l'eau et le cokage du solide catalytique. Plus précisément la faible sélectivité due à la réaction inverse de gaz à l'eau consomme une grande partie du dihydrogène formé ; et la désactivation rapide du catalyseur par le coke formé et déposé sur le solide catalytique sont les deux problèmes majeurs du reformage sec.

En d'autres termes la production de gaz de synthèse ne se fait actuellement pas favorablement par reformage sec, notamment à cause de ces inconvénients.

### EXPOSE DE L'INVENTION

L'invention vise à remédier aux inconvénients de l'état de la technique et notamment à éviter la réaction inverse du gaz à l'eau ainsi que le cokage tout en ayant un rapport H2/CO de l'ordre de deux en sortie de phase de réaction du méthane.

Pour ce faire est proposé selon un premier aspect de l'invention un procédé de reformage sec d'au moins un alcane selon la revendication 1.

Avantageusement, Ox2 est choisi parmi Al2O3, MgO, Ta2O5, Y2O3, ZrO2.

Ledit au moins un réacteur peut être à lit catalytique, de préférence fixe. Le lit fixe peut être constitué par un remplissage de grains de catalyseur(s) ou par la surface d'objets solides tels que les parois du réacteur ou d'un insert.

Avantageusement, on exploite ici un mécanisme physique impliquant un vecteur d'oxygène de façon périodique pour le reformage d'un alcane par le dioxyde de carbone, pour la production de gaz de synthèse.

Un tel procédé allie donc l'avantage du reformage sec par rapport aux autres voies de reformage à savoir la consommation d'une molécule à effet de serre notoire, le dioxyde de carbone, avec un fonctionnement stable et une haute sélectivité en gaz de synthèse. La récupération des gaz de chacune des phases du cycle permet d'obtenir d'un côté un gaz de synthèse riche en hydrogène (contrairement au procédé en co-alimentation en continu), et de l'autre côté un gaz riche en monoxyde de carbone pouvant être exploité industriellement.

Selon un aspect intéressant de l'invention, l'alcane est du méthane (CH4).

Préférentiellement, le ratio massique Me1/Ox1 est compris entre 0 et 0.9 environ.

En outre, Me1 est choisi parmi l'un des éléments suivants pris isolément ou en combinaison : Ag, Au, Co, Cr, Ir, La, Mn, Ni, Os, Pd, Pt, Re, Rh, Ru, Sc, W, Mo.

Préférentiellement l'élément Me1 est initialement mis en oeuvre sous forme d'oxyde ou d'hydroxyde.

De plus, Ox1 est choisi parmi un oxyde des éléments suivants pris isolément ou en combinaison : Ce, Fe, Nb, Ti, W, Mo. Ox1 peut contenir du V et/ou du Zr. Il peut contenir jusqu'à 30% en poids de l'un de ces éléments.

Par ailleurs, ledit solide catalytique peut être exposé pendant le même temps à l'alcane, préférentiellement au méthane, et au dioxyde de carbone. Le temps considéré est d'une minute environ.

Selon un mode préféré de réalisation de l'invention, ledit solide catalytique comprend un support en CeO2 incluant du Nickel et/ou du Cobalt, de préférence dans un ratio de 8.7% en poids.

La température mise en oeuvre dans ce procédé peut être comprise entre 650°C et 850°C.

De façon intéressante, jusqu'à 80% du dioxyde de carbone injecté fait partie du flux d'alcane.

### DESCRIPTION DETAILLEE D'UN MODE DE REALISATION

Comme déjà évoqué, la présente invention concerne, selon un de ses aspects, un procédé de reformage sec dans lequel le solide catalytique est exposé de manière alternée et répétée à chacun des réactifs du reformage sec (méthane et dioxyde de carbone) et où il fait office de vecteur d'oxygène. Dans un premier temps le solide réagit avec le méthane pour former le monoxyde de carbone et le dihydrogène ; dans un second temps il réagit avec le dioxyde de carbone pour se recharger en oxygène. Durant cette seconde phase, d'éventuels résidus carbonnés sont réoxydés par le dioxyde de carbone. Le solide étant régénéré à chaque cycle, la déactivation par cokage est évitée. L'hydrogène produit n'est jamais en contact avec le dioxyde de carbone (réactif), évitant ainsi la réaction inverse de gaz à l'eau.

L'activité et la sélectivité du solide sont assurées par la présence d'un oxyde réductible (CeO2 dans l'exemple) faisant office de vecteur d'oxygène, et d'un métal (Ni, Co dans les exemples), non-oxydable dans les conditions de réalisation du procédé, qui assure l'activation du méthane.

Ainsi une telle réaction fait subir à un solide catalytique des cycles répétés d'oxydation-réduction en l'exposant au méthane et au dioxyde de carbone de manière alternée. De façon pratique ceci est réalisé en alimentant le réacteur à lit fixe de manière périodique. Pour ce type de réacteur, la température de réaction doit nécessairement être identique dans les deux étapes du procédé périodique.

Il s'agit d'une méthode simple pour réaliser ce type de réaction tant à l'échelle du laboratoire qu'à l'échelle industrielle. De manière intéressante, le procédé peut être mis en oeuvre avec un lit fluidisé circulant. Dans ce cas le solide est transporté entre deux réacteurs distincts où il est exposé à chacun des réactifs indépendamment. Ce procédé présente par ailleurs l'avantage de pouvoir optimiser de manière plus efficace chacune des phases de réaction et donc une exploitation encore plus efficace de l'invention.

Le type d'outil analytique employé (spectrométrie de masse en ligne) impose de travailler avec des concentrations réduites en réactifs (typiquement de 5 à 25 de manière quantitative, jusque 50% de manière moins quantitative), néanmoins le concept défendu devrait être parfaitement réalisable avec des flux de gaz purs.

Le principe du procédé selon l'invention consiste à employer un solide ayant notamment les propriétés particulières suivantes:
1. Il doit présenter une capacité de stockage et de transfert d'oxygène ;
2. Il doit permettre l'activation du méthane ;
3. Il doit, dans les conditions de mise en oeuvre, conduire sélectivement au gaz de synthèse (CH4 + Sol-O-> CO + 2H2 + Sol-R) et non à l'oxydation totale (CH4 + 4Sol-O -> CO2 + 2H2O+ 4Sol-R) (Sol-O et Sol-R représentent le solide oxydé et réduit, respectivement). La formation de sous-produits doit aussi être limitée (p.ex des alcènes). La formation de carbone solide (CH4-> C+ 2H2 ou 2CO -> CO2 + C) doit être limitée dans la mesure du possible mais n'est pas rédhibitoire dans la mesure où le solide est régénéré continuellement par la réaction CO2+C -> 2CO ;
4. La capacité de stockage d'oxygène doit être reconstituée par réoxydation par le CO2.

De façon intéressante, la composition d'un solide catalytique peut être généralisée de la sorte : Me1 - Ox1 - Ox2 ; où :
Me1 est élément non réoxydable sous dioxyde de carbone. Me1 peut être un des éléments suivants ou une combinaison des éléments suivants: Ag, Au, Co, Cr, Ir, La, Mn, Ni, Os, Pd, Pt, Re, Rh, Ru, Sc, W, Mo. A l'état initial de fonctionnement, Me1 peut être sous une forme réduite ou sous toute forme d'oxyde ou d'hydroxyde, ou un mélange des deux, réductible sous méthane. La sélection des éléments proposée pour Me1 est basée sur la thermodynamique de la réductibilité de l'Oxyde sous méthane et celle de la réoxydation du métal réduit par le dioxyde de carbone. Les éléments en question doivent aussi avoir montré une certaine capacité à activer le méthane, pour tout type de réaction.

Ox1 est un oxyde réductible sous méthane et réoxydable sous dioxyde de carbone. Sont sélectionnés les éléments Ox1 pour lesquelles la thermodynamique (dans les conditions de températures proposées) de la réaction d'oxydation partielle du méthane en monoxyde de carbone et dihydrogène est plus favorable que l'oxydation totale en dioxyde de carbone et eau. Ox1 peut donc être un oxyde des éléments suivants ou un oxyde d'une combinaison des éléments suivants : Ce, Fe, Nb, Ti, W, Mo. L'oxyde peut également contenir des quantités inférieures à 30% de V et/ou Zr associées aux éléments précédents. Si ces deux éléments ne répondent pas directement aux critères thermodynamiques de réductibilité et de sélectivité, ils sont connus pour affecter les propriétés de solides basés sur les oxydes proposés pour Ox1.

Les oxydes Al2O3, MgO, Ta2O5, Y2O3, ZrO2 peuvent être employés comme supports des solides réactifs afin, par exemple, d'en améliorer : la dispersion, la réactivité ou la stabilité chimique et mécanique. Ox2 peut donc être choisi parmi Al2O3, MgO, Ta2O5, Y2O3, ZrO2.

La proportion massique entre Me1/Ox1 peut varier de 0 à 0.9. ; celle de Ox2/(Me1+Ox1) de 0 à 100.

Les conditions 1 et 4 doivent en général être assurées par un oxyde réductible. La condition 2 peut être assurée par ce même oxyde ou par une autre phase solide associée au premier, par exemple un métal supporté sur l'oxyde réductible. La condition 3 est déterminée par la nature de l'oxyde ou de l'ensemble de phases présentes ainsi que des conditions opératoires.

Des essais fructueux ont été obtenus en utilisant un solide à base d'oxyde de cérium (CeO) associé à des particules de métal (Ni, Co) supportées sur cet oxyde. Le support agit comme vecteur d'oxygène par oxydation et réduction sous CO2 et CH4 respectivement. Le métal permet la bonne activation du méthane et donc des conversions élevées. A noter que les métaux cités ne se ré-oxydent pas en présence de CO2 dans les conditions de réaction comme il a pu être vérifié par des calculs thermodynamiques. Dans ces conditions, la sélectivité lors de l'oxydation du méthane est excellente (cf. exemples) alors que sous forme oxydée (par exemple par du dioxygène) ces mêmes éléments conduisent à l'oxydation totale du méthane dans les mêmes conditions opératoires. Les catalyseurs à base d'oxydes de Ni supporté sont d'ailleurs bien connus pour l'oxydation totale du méthane en boucle chimique pour la production de chaleur.

Le procédé proposé a été testé avec des solides fabriqués en laboratoire. Le comportement du catalyseur à base de Ni supporté sur CeO2 a été vérifié en employant un support préparé au laboratoire mais également un support commercial (Aldrich). Les performances en termes d'activité (conversion du méthane et du dioxyde de carbone) sont inférieures mais peuvent être imputées à l'aire spécifique moindre du support commercial. Par contre en termes de sélectivité, les performances ont validé le principe du procédé périodique indépendamment de l'origine du support. Il en est de même pour les performances du solide à base de cobalt supporté, élément connu pour sa capacité à activer le méthane.

Les tableaux suivants présentent quelques résultats représentatifs. Y sont reportés, dans le premier : la nature du solide employé (le type de support employé Ox1 et son origine ; la nature du métal Me1, le ratio massique Me1/Ox1 ainsi que les conditions de réaction (la quantité de solide mise en oeuvre, la température de réaction, les concentrations de méthane et de dioxyde de carbone employés, le débit total de gaz entrant, les conditions d'opération périodique (durées des cycles)). Dans le second : lors de l'exposition au méthane la conversion de méthane, le rapport H2/CO mesurée, le pourcentage de méthane converti conduisant à la formation de carbone solide ; lors de l'exposition au dioxyde de carbone la conversion de dioxyde de carbone, le rapport CO/(CO2 converti).

Idéalement, le rapport H2/CO devrait être équivalent à 2. Une valeur supérieure est indicative de formation de carbone solide, inférieure de la présence de la réaction inverse de gaz à l'eau. Le pourcentage de carbone formé devrait être aussi faible que possible. Le rapport CO/CO2 devrait idéalement être égal à 1, une valeur supérieure étant indicative de l'oxydation du carbone déposé sur le support. Les conversions de méthane et de dioxyde de carbone devraient être équivalentes.

Chaque expérience est composée de 12 cycles complets. Les valeurs indiquées sont des moyennes intégrées sur les 6 derniers cycles réalisés. Des expériences avec 60 cycles ont également été réalisées et montrent une excellente stabilité du comportement des solides (exemples 1, 2, 3).

Les résultats montrent que dans des conditions très larges de fonctionnement tant en composition des flux réactionnels, que de température, de quantités et de nature du solide, les performances du système sont proches de l'idéal en termes de sélectivité (CO/H2). Les résultats se différencient uniquement en termes de réactivité (conversions) et de pourcentage plus ou moins important de méthane transformé de carbone solide.

Les résultats obtenus montrent la robustesse de ce procédé lorsque les conditions ci-dessus sont respectées, mais également son adaptabilité à de vastes conditions de fonctionnement. Ils démontrent aussi une grande marge de manoeuvre d'optimisation, en particulier par :
- Le contrôle de la quantité et de la nature de la phase métallique, voire multi-métallique en associant plusieurs éléments afin d'optimiser le processus d'activation du méthane et du CO2,
- Le contrôle de l'apport d'oxygène depuis le support en modifiant sa nature (oxydes, oxydes mixtes, oxydes dopés)
- Le contrôle de l'activation du CO2 par des modifications du support (imprégnation, dopage).

En principe, le procédé selon l'invention est bien adapté pour le reformage du méthane sans exclure pour autant d'autres alcanes (p.ex. éthane, propane, ...).

La réaction de reformage sec du méthane implique la consommation d'un équivalent de CH4 pour un équivalent de CO2. L'invention prévoit un apport séparé de ces deux réactifs afin d'optimiser les performances des catalyseurs utilisés. Il est néanmoins envisageable sans sortir du cadre de l'invention d'apporter une partie du CO2 simultanément au méthane (coalimentation) tout en conservant une partie des avantages de ce procédé (carbone solide éliminé lors de chaque cycle, contribution moindre de la réaction inverse de gaz à l'eau). La part du CO2 apportée avec l'alcane ne doit toutefois pas excéder 80% du CO2 total nécessaire au reformage sec.

**Tableau N° 1 : détails expérimentaux des exemples**

| Exempl e N° | CeO2 | Métal | Métal (%poid) | mₛₒₗ (g) | T(°C ) | Concentration réactifs | Cycle s (nb) | Débit entrant (cc/min) | cycle |
|---|---|---|---|---|---|---|---|---|---|
| 1 | fabrication | Ni | 8.7 | 0.40 | 800 | 25% CH₄ | 60 | 100 | 1min. CH₄ |
| | | | | | | 25% CO₂ | | | 1min. CO₂ |
| 2 | fabrication | Ni | 8.7 | 0.20 | 800 | 5% CH₄ | 60 | 100 | 1min. CH₄ |
| | | | | | | 5% CO₂ | | | 1min. CO₂ |
| 3 | fabrication | Co | 8.7 | 0.20 | 800 | 5% CH₄ | 60 | 100 | 1min. CH₄ |
| | | | | | | 5% CO₂ | | | 1min. CO₂ |
| 4 | fabrication | Ni | 2.0 | 0.20 | 700 | 5% CH₄ | 12 | 100 | 1min. CH₄ |
| | | | | | | 5% CO₂ | | | 1min. CO₂ |
| 5 | fabrication | Ni | 8.7 | 0.20 | 700 | 5% CH₄ | 12 | 100 | 1min. CH₄ |
| | | | | | | 5% CO₂ | | | 1min. CO₂ |
| 6 | fabrication | Ni | 8.7 | 0.20 | 800 | 5% CH₄ | 12 | 100 | 1min. CH₄ |
| | | | | | | 5% CO₂ | | | 1min. CO₂ |
| 7 | fabrication | Ni | 8.7 | 0.20 | 750 | 5% CH₄ | 12 | 100 | 1min. CH₄ |
| | | | | | | 5% CO₂ | | | 1min. CO₂ |
| 8 | fabrication | Ni | 8.7 | 0.20 | 700 | 5% CH₄ | 12 | 100 | 1min. CH₄ |
| | | | | | | 5% CO₂ | | | 1min. CO₂ |
| 9 | fabrication | Ni | 8.7 | 0.20 | 650 | 5% CH₄ | 12 | 50 | 1min. CH₄ |
| | | | | | | 5% CO₂ | | | 1min. CO₂ |
| 10 | commerci al | Ni | 8.7 | 0.20 | 800 | 5% CH₄ | 12 | 100 | 1min. CH₄ |
| | | | | | | 5% CO₂ | | | 1min. CO₂ |
| 11 | fabrication | Co | 8.7 | 0.20 | 800 | 5% CH₄ | 12 | 100 | 1min. CH₄ |
| | | | | | | 5% CO₂ | | | 1min. CO₂ |
| 12 | fabrication | Co | 8.7 | 0.20 | 750 | 5% CH₄ | 12 | 100 | 1min. CH₄ |
| | | | | | | 5% CO₂ | | | 1min. CO₂ |
| 13 | fabrication | Co | 8.7 | 0.20 | 700 | 5% CH₄ | 12 | 100 | 1min. CH₄ |
| | | | | | | 5% CO₂ | | | 1min. CO₂ |

**Tableau n° 2 : Résultats expérimentaux des exemples**

| Exemple N° | Conversion CH₄ (%) ±1 | H₂/CO ±0.2 | C_{déposé}/C_{conv.} (%) ± 2 | Conversion CO₂ (%) ±1 | CO/CO_{2,conv.} ±0.1 |
|---|---|---|---|---|---|
| 1 | 54 | 2.2 | 3 | 60 | 1.0 |
| 2 | 84 | 2.0 | 3 | 83 | 1.0 |
| 3 | 69 | 2.0 | < 2 | 74 | 1.0 |
| 4 | 38 | 1.9 | < 2 | 37 | 1.2 |
| 5 | 68 | 1.9 | < 2 | 71 | 1.1 |
| 6 | 88 | 2.1 | 5 | 87 | 1.0 |
| 7 | 80 | 2.0 | 1 | 79 | 1.0 |
| 8 | 65 | 2.1 | 5 | 65 | 1.0 |
| 9 | 41 | 2.1 | 1 | 43 | 1.1 |
| 10 | 13 | 1.8 | < 2 | 22 | 0.9 |
| 11 | 77 | 2.1 | < 2 | 84 | 1.0 |
| 12 | 68 | 2.1 | 2 | 71 | 1.0 |
| 13 | 51 | 2.1 | < 2 | 52 | 1.0 |

Ainsi il est intéressant de constater que le procédé selon l'invention permet d'éviter la réaction inverse de gaz à l'eau entre le dioxyde de carbone (réactif du reformage sec) et le dihydrogène (produit du reformage sec), réaction qui affecte la sélectivité du procédé lorsque les deux réactifs sont alimentés simultanément. Le cokage du catalyseur en contact avec le méthane peut aussi être considérablement réduit voire annulé. Le recyclage périodique du solide catalytique permet la réoxydation du matériau et donc le maintient des performances.

De façon particulièrement intéressante, le procédé selon l'invention peut permettre de valoriser le biogaz ; d'autres sources plus complexes comme par exemple des mélanges avec d'autres alcanes ou alcènes provenant du gaz naturel, peuvent également être valorisées par le procédé selon l'invention.

## Revendications

1. Procédé de reformage sec d'au moins un alcane, réalisé dans au moins un réacteur traversé par un flux gazeux **caractérisé en ce que** ledit au moins un réacteur comprend un solide catalytique exposé cycliquement et alternativement à un flux contenant un alcane et à un flux contenant du dioxyde de carbone, de telle sorte que ledit solide catalytique sert de vecteur d'oxydation, où dans un premier temps ledit solide réagit avec l'alcane pour former le monoxyde de carbone et le dihydrogène et dans un second temps ledit solide réagit avec le dioxyde de carbone pour se recharger en oxygène et **en ce que** ledit solide catalytique est composé de Me1 -Ox1 - Ox2 où :
Me1 est un élément non réoxydable sous dioxyde de carbone ; Ox1 est un oxyde réductible sous alcane et réoxydable sous dioxyde de carbone ; Ox2 est un oxyde inerte vis-à-vis dudit alcane et du dioxyde de carbone, le ratio Ox2/ (Me1 +Ox1) allant de 0 à 100 en proportion massique, et **en ce que** Me1 est choisi parmi l'un des éléments suivants pris isolément ou en combinaison : Ag, Au, Co, Cr, Ir, La, Mn, Ni, Os, Pd, Pt, Re, Rh, Ru, Se, W, Mo.

2. Procédé de reformage selon la revendication 1 **caractérisé en ce que** ledit 0x2 est choisi parmi Al₂O₃, MgO, Ta₂O₅, Y₂O₃, ZrO₂.

3. Procédé de reformage selon l'une des revendications 1 ou 2 **caractérisé en ce que** ledit au moins un réacteur est à lit catalytique.

4. Procédé de reformage selon l'une des revendications précédentes **caractérisé en ce que** ledit au moins un réacteur est à lit catalytique fixe.

5. Procédé de reformage catalytique selon l'une des revendications précédentes **caractérisé en ce que** l'alcane est du méthane.

6. Procédé de reformage selon l'une des revendications précédentes selon lequel le ratio massique Me1/Ox1 est compris entre 0 et 0.9 environ.

7. Procédé de reformage selon l'une des revendications précédentes **caractérisé en ce que** l'élément Me1 est initialement mis en oeuvre sous forme d'oxyde ou d'hydroxyde.

8. Procédé selon l'une des revendications précédentes **caractérisé en ce que** Ox1 est choisi parmi un oxyde des éléments suivants pris isolément ou en combinaison : Ce, Fe, Nb, Ti, W, Mo.

9. Procédé selon la revendication 8 **caractérisé en ce que** Ox1 peut contenir du V et/ou du Zr.

10. Procédé selon la revendication 1 **caractérisé en ce que** ledit solide catalytique comprend un support en CeO₂ incluant du Ni et/ou du Co, de préférence dans un ratio de 8.7% en poids.

11. Procédé de reformage selon l'une des revendications précédentes **caractérisé en ce que** jusqu'à 80% du dioxyde de carbone injecté fait partie du flux d'alcane.

## Patentansprüche

1. Verfahren zur Trockenreformierung mindestens eines Alkans in mindestens einem von einem Gasstrom durchlaufenen Reaktor, **dadurch gekennzeichnet, dass** der mindestens eine Reaktor einen katalytischen Festkörper umfasst, der zyklisch und alternativ einem Strom, der ein Alkan enthält, und einem Strom, der Kohlendioxid enthält, ausgesetzt wird, sodass der katalytische Festkörper als Oxidationsvektor fungiert,
wobei in einem ersten Zeitraum der Festkörper mit dem Alkan eine Reaktion eingeht, um Kohlenmonoxid und Dihydrogen zu bilden, und in einem zweiten Zeitraum der Festkörper mit dem Kohlendioxid eine Reaktion eingeht, um sich wieder mit Sauerstoff zu beladen, und dadurch, dass der katalytische Festkörper aus Me1 - Ox1 - Ox2 besteht, wobei:
Me1 ein Element ist, das unter Kohlendioxid nicht rückoxidierbar ist;
Ox1 ein Oxid ist, das unter Alkan reduzierbar ist und unter Kohlendioxid rückoxidierbar ist;
Ox2 ein dem Alkan und Kohlendioxid gegenüber inertes Oxid ist, wobei das Verhältnis Ox2/(Me1 + Ox1) ein Massenverhältnis von 0 - 100 darstellt und
dass Me1 aus den nachfolgenden Elementen - allein oder in Kombination - gewählt ist: Ag, Au, Co, Cr, Ir, La, Mn, Ni, Os, Pd, Pt, Re, Rh, Ru, Se, W, Mo.

2. Reformierungsverfahren nach Anspruch 1, **dadurch gekennzeichnet, dass** das Ox2 gewählt ist aus: Al₂O₃, MgO, Ta₂O₅, Y₂O₃, ZrO₂.

3. Reformierungsverfahren nach einem der Ansprüche 1 oder 2, **dadurch gekennzeichnet, dass** der mindestens eine Reaktor ein katalytisches Bett aufweist.

4. Reformierungsverfahren nach einem der vorstehenden Ansprüche, **dadurch gekennzeichnet, dass** der mindestens eine Reaktor ein katalytisches Festbett aufweist.

5. Katalytisches Reformierungsverfahren nach einem der vorstehenden Ansprüche, **dadurch gekennzeichnet, dass** es sich beim Alkan um Methan handelt.

6. Reformierungsverfahren nach einem der vorstehenden Ansprüche, wobei das Massenverhältnis Me1/Ox1 etwa zwischen 0 und 0,9 liegt.

7. Reformierungsverfahren nach einem der vorstehenden Ansprüche, **dadurch gekennzeichnet, dass** das Element Me1 zunächst in Oxid- oder Hydroxidform eingesetzt wird.

8. Verfahren nach einem der vorstehenden Ansprüche, **dadurch gekennzeichnet, dass** Ox1 aus einem Oxid der nachfolgenden Elemente - allein oder in Kombination - gewählt ist: Ce, Fe, Nb, Ti, W, Mo.

9. Verfahren nach Anspruch 8, **dadurch gekennzeichnet, dass** Ox1 V und/oder Zr enthalten kann.

10. Verfahren nach Anspruch 1, **dadurch gekennzeichnet, dass** der katalytische Festkörper einen CeO₂-Träger umfasst, der Ni und/oder Co umfasst, und zwar vorzugsweise in einem Anteil von 8,7 Gew. %.

11. Reformierungsverfahren nach einem der vorstehenden Ansprüche, **dadurch gekennzeichnet, dass** der Alkanstrom zu bis zu 80 % aus eingespritztem Kohlendioxid besteht.

## Claims

1. Method for dry reforming of at least one alkane, carried out in at least one reaction chamber exposed to a stream of gas, **characterised in that** said at least one reaction chamber comprises a catalytic solid which is cyclically and alternatively exposed to a stream containing an alkane and to a stream containing carbon dioxide, such that said catalytic solid is used as an oxidation vector, wherein as a first step said solid reacts with said alkane to form carbon monoxide and dihydrogen and as a second step said solid reacts with carbon dioxide to recharge in oxygen and
**in that** said catalytic solid consists of Me1 -Ox1 - Ox2 where: Me1 is an element that can not be oxidised in carbon dioxide; Ox1 is a reducible oxide in alkane and can be re-oxidised in carbon dioxide; Ox2 is an inert oxide with respect to said alkane and carbon dioxide, the ratio Ox2/(Me1+Ox1) ranging from 0 to 100 in mass proportion and **in that** Me1 is chosen from among the following elements taken alone or in combination: Ag, Au, Co, Cr, Ir, La, Mn, Ni, Os, Pd, Pt, Re, Rh, Ru, Sc, W, Mo.

2. Reforming method according to claim 1 **characterised in that** said Ox2 is chosen from among Al₂O₃, MgO, Ta₂O₅, Y₂O₃, ZrO₂.

3. Reforming method according to either claim 1 or 2 **characterised in that** said at least one reaction chamber is a catalytic bed reaction chamber.

4. Reforming method according to one of the previous claims **characterised in that** said at least one reaction chamber is a fixed catalytic bed reaction chamber.

5. Catalytic reforming method according to one of the previous claims **characterised in that** the alkane is methane.

6. Reforming method according to one of the previous claims in that the Me1/Ox1 mass ratio is approximately between 0 and 0.9.

7. Reforming method according to one of the previous claims **characterised in that** the element Me1 is initially used in oxide or hydroxide form.

8. Method according to one of the previous claims in that Ox1 is chosen from among an oxide of the following elements taken alone or in combination: Ce, Fe, Nb, Ti, W, Mo.

9. Method according to claim 8 **characterised in that** Ox1 may contain V and/or Zr.

10. Method according to claim 1 **characterised in that** said catalytic solid comprises a Ce02 support including Ni and/or Co, preferably in a ratio of 8.7% in weight.

11. Reforming method according to one of the previous claims **characterised in that** up to 80% of the injected carbon dioxide is part of the stream of alkane.
